# EUROPÄISCHE PATENTSCHRIFT

(11) **EP 0 442 051 B1**
(45) Veröffentlichungstag und Bekanntmachung des Hinweises auf die Patenterteilung: **08.09.1993**
(21) Anmeldenummer: 90122509.4
(22) Anmeldetag: 26.11.1990
(51) Int. Cl.: G01B 3/10

(54) **Rollbandmass**
Measuring tape
Ruban de mesure

(30) Priorität: 14.02.1990 DE 9001732 U
(43) Veröffentlichungstag der Anmeldung: 21.08.1991
(73) Patentinhaber: STABILA Messgeräte Gustav Ullrich GmbH & Co. KG, D-78655 Annweiler am Trifels (DE)
(72) Erfinder: von Wedemeyer, Peter, W-7562 Gernsbach (DE)
(74) Vertreter: Patentanwälte Möll und Bitterich

(56) Entgegenhaltungen:
- DE-A- 3 141 635
- US-A- 1 434 528
- US-A- 2 466 405

## Beschreibung

Die Erfindung betrifft ein Rollbandmaß, wie Taschen-, Kapsel-, Rahmenbandmaß oder dergleichen, dessen Meßband an seinem freien Ende mit einem etwa im rechten Winkel zum Meßband abstehenden Anschlagteil versehen ist, der zum Anschlagen des Bandes an der Kante oder dem Rand eines Meßobjektes bestimmt ist, wobei die dem Meßband zugewandte Anschlagseite des Anschlagteils aufgerauht ist (US-A-1 434 528).

Derartige Anschläge bei Rollbandmaßen sind in der Regel als winkelförmige Haken ausgebildet, die mit ihrem zum Meßband parallelen Befestigungsteil am Bandanfang in Bandlängsrichtung verschiebbar befestigt sind und einen davon hakenförmig im rechten Winkel stehenden Anschlagteil haben. Beim Messen kann der Anschlagteil entweder mit seiner vom Meßband abgewandten Außenseite oder mit seiner dem Meßband zugewandten Innenseite an die Fläche oder Kante eines Meßobjektes angeschlagen werden.

Soll beispielsweise das lichte Breitenmaß einer Fensteröffnung gemessen werden, wird die Außenseite des Anschlaghakens an die Wand der Fensteröffnung angelegt.

Wird dagegen die Breite oder Länge einer Tischplatte gemessen, wird das Meßband mit dem Anschlaghaken am Rand der Tischplatte eingehakt und über die Platte hinweg ausgezogen. Dabei gleitet der Anschlag häufig von der Tischkante ab, auch wenn das Meßband aus einem flexibel-stabilen Material wie Stahl besteht, und das Ansetzen des Anschlags an der Meßkante muß mehrfach wiederholt werden.

Um dies zu verhindern, wird man bei kurzen Meßlängen, die im Bereich der Armlängen liegen, mit einer Hand den Anschlaghaken festhalten und mit der anderen Hand das Meßband ausrollen. Bei größeren Meßlängen muß jedoch entweder eine Hilfsperson mitwirken oder der Anschlaghaken muß mit einem Hilfsmittel - Nadel, Klebeband, Magnet oder dergleichen - fixiert werden.

Um einen besseren Halt zu erzielen, sind Anschlaghaken mit geriffelter Anschlagfläche bekannt geworden, die sich in den Werkstoff des Meßobjektes einkrallen sollen. Diese Riffelungen genügen erfahrungsgemäß nicht, um ein Abgleiten des Anschlags zu verhindern.

Aus der DE-U-19 45 354 ist ein Rollbandmaß mit einem klappbaren Anschlaghaken bekannt. Dieser besitzt zwei mehrere Millimeter lange, spitze Zähne, die sich in das Meßobjekt einkrallen sollen. Dadurch besteht eine Verletzungsgefahr. Ist das Material des Meßobjektes hart, gleiten die Zähne ab, werden stumpf und/oder verbiegen sich. Ist das Material des Meßobjektes weich, dringen die Zähne mehr oder weniger tief ein, der exakte Nullpunkt der Meßskala geht verloren.

Der Erfindung liegt daher die Aufgabe zugrunde, bei einem Rollbandmaß den Anschlag für das Meßband derart auszubilden, daß er bei hoher Verschleißfestigkeit und ohne zusätzliche Hilfsmittel eine außerordentlich gute Haftung an der Meßkante ermöglicht, sich sowohl bei Innenmessung als auch bei Außenmessung genau auf den Nullpunkt der Meßskala des Meßbandes einstellt sowie Verletzungen des Benutzers und Beschädigungen des Meßobjektes oder des Bandmaßbehältnisses vermeidet.

Diese Aufgabe wird erfindungsgemäß bei dem Rollbandmaß der eingangs genannten Gattung dadurch gelöst, daß Reibkörper in Form von feinen Kristallen aus mineralischen oder synthetischen Stoffen auf die Anschlagseite aufgebracht sind, welche harte und scharfe Kanten und/oder Spitzen haben und daß die Korngröße maximal 0,25 mm, vorzugsweise ca. 0,12 mm beträgt.

Diese Reibkörper verleihen dem Anschlag eine hohe Reibhaftung an der Meßkante, wobei jedoch Verletzungen und Beschädigungen ausgeschlossen sind, auch bei weichen Materialien. Der exakte Nullpunkt der Meßskala bleibt erhalten, weil die Spitzen der Reibkörper - wenn überhaupt - nur zu einem Bruchteil in das Meßobjekt eindringen.

Die feinen Reibkörper bestehen aus einem Stoff, der in der Mohr'schen Härteskala mindestens den Härtegrad 4, vorzugsweise den Härtegrad 6 hat. Zweckmäßig bestehen sie aus einem Stoff wie Silikat, Quarz, Feldspat, Saphir, Korund, Diamant und anderen harten Stoffen. Dadurch ergibt sich eine hohe Verschleißfestigkeit, insbesondere Dauerverschleißfestigkeit.

Die Reibkörper können in einer dünnen, genau definierten Dicke aufgebracht werden, zweckmäßig nur einlagig. Die Reibkörper können an den Anschlag angeklebt oder angesintert oder in den Anschlag galvanisch eingebettet sein. Die Reibkörper können über die gesamte Anschlagseite des abstehenden Anschlages oder nur auf einem Teilbereich dieser Anschlagseite, zweckmäßig im Bereich des freien Endes der Anschlagseite, aufgebracht sein. Die Reibkörper können zumindest teilweise im Abstand voneinander verteilt oder dicht an dicht in einer geschlossenen Schicht angeordnet sein.

Im folgenden wird die Erfindung anhand der in der Zeichnung dargestellten Ausführungsbeispiele näher beschrieben. Es zeigen
- Fig. 1: den Bandanfang eines Rollbandmaßes mit Anschlaghaken in einer ersten Ausführungsform in Pespektive,
- Fig. 2: den Bandanfang eines Rollbandmaßes mit Anschlaghaken in einer zweiten Ausführungsform in Perspektive und
- Fig. 3: das Anschlagen eines Meßbandes mit Anschlaghaken an der abgerundeten Kante einer zu messenden Platte in Seitenansicht.

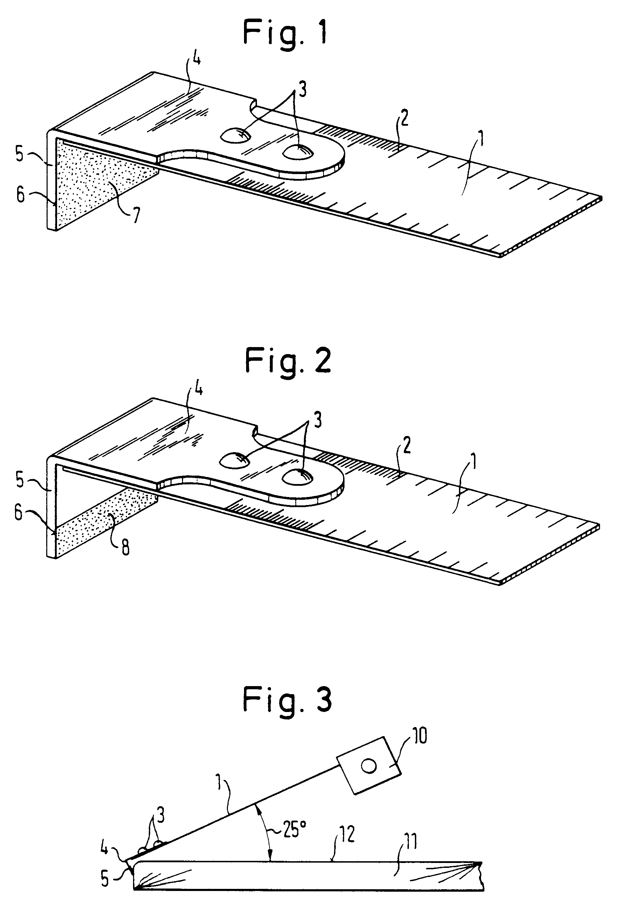

Die Fig. 1 und 2 zeigen Meßbänder 1, z. B. eines Taschen-, Kapsel- oder Rahmenbandmaßes 10 , die an ihren Oberseiten mit Maßskalen 2 versehen sind. Am Bandanfang ist mittels Nieten 3 ein Anschlaghaken 4 befestigt, der einen im rechten Winkel vom Meßband 1 abstehenden Anschlagteil 5 hat, mit dessen Innen- oder Außenseite das Meßband 1 an ein Meßobjekt 11 angelegt werden kann. Soll zum Beispiel das Meßband 1 an die Kante einer Platte 11 angelegt werden, kann der Anschlaghaken 4 mit seiner Innenfläche 6 an die Kante eingehängt werden (siehe Fig. 3). Das Meßband 1 besteht aus einem flexibel-stabilen Material, meist Stahl. Kunststoffe oder Verbundmaterialien sind ebenfalls geeignet.

Um einen besseren Halt des Anschlaghakens 4 an der glatten und häufig abgerundeten Kante des Meßobjektes 11 zu erzielen, ist die dem Meßobjekt 11 zugewandte innere Anschlagseite 6 des Anschlagteils 5 mit einer Beschichtung 7 aus feinen Reibkörpern versehen, die aus mineralischen oder synthetischen Stoffen bestehen und auf der Anschlagseite 6 durch Kleben, Sintern oder galvanisches Einbetten haftfest befestigt sind. Bei der Ausführungsform gemäß Fig.1 erstreckt sich diese Beschichtung 7 über die gesamte Anschlagseite 6; bei der Ausführungsform gemäß Fig. 2 erstreckt sie sich nur über einen Streifenförmigen Teilbereich 8, der dem freien Ende des Anschlagteiles 5 benachbart ist.

In Fig. 3 ist ein mit der inneren Anschlagseite 6 eines Anschlaghakens 4 an die Kante eines plattenförmigen Meßobjektes 11 angelegtes Meßband 1 gezeigt. Beim Ausziehen des Meßbandes 1 aus dem Bandmaßgehäuse 10 liegt das Meßband 1 häufig nicht unmittelbar auf der Meßebene 12 des Meßobjektes auf, sondern erstreckt sich in einem Winkel von der Meßebene weg, wie dies aus Fig. 3 ersichtlich ist. Der Winkel zwischen Meßband 1 und Meßebene 12 führt dazu, daß der Haken 4 von der Kante des Meßobjektes 11 abrutscht. Dank der erfindungsgemäßen Beschichtung der inneren Anschlagseite 6 des Anschlaghakens 4 mit harten Reibkörpern sind Winkel zwischen Meßband 1 und Meßebene bis zu 25 Grad möglich, ohne daß der Haken 4 von der Kante des Meßobjekts 11 abgleitet. Darüber hinaus ist diese Beschichtung auf Dauer verschleißfest.

## Patentansprüche

1. Rollbandmaß, wie Taschen-, Kapsel-, Rahmenbandmaß oder dergleichen, dessen Meßband (1) an seinem freien Ende mit einem etwa im rechten Winkel zum Meßband (1) abstehenden Anschlagteil (5) versehen ist, der zum Anschlagen des Bandes (1) an der Kante oder dem Rand eines Meßobjektes (11) bestimmt ist, wobei die dem Meßband (1) zugewandte Anschlagseite (6) des Anschlagteils (5) aufgerauht ist, dadurch gekennzeichnet, daß Reibkörper in Form von feinen Kristallen aus mineralischen oder synthetischen Stoffen auf die Anschlagseite (6) aufgebracht sind, welche harte und scharfe Kanten und/oder Spitzen haben, und daß die Korngröße maximal 0,25 mm, vorzugsweise ca. 0,12 mm, beträgt.

2. Rollbandmaß nach Anspruch 1, dadurch gekennzeichnet, daß die Reibkörper aus einem Stoff bestehen, der in der Mohr'schen Härteskala mindestens den Härtegrad 4, vorzugsweise den Härtegrad 6 hat.

3. Rollbandmaß nach Anspruch 1 oder 2, dadurch gekennzeichnet, daß die Reibkörper aus einem Stoff wie Glas, Silikat, Quarz, Feldspat, Saphir, Korund oder Diamant bestehen.

4. Rollbandmaß nach einem der Ansprüche 1 bis 3, dadurch gekennzeichnet, daß die Reibkörper im wesentlichen einlagig aufgebracht sind.

5. Rollbandmaß nach Anspruch 1, dadurch gekennzeichnet, daß die Reibkörper an den Anschlagteil (5) angeklebt oder angesintert oder in diesem galvanisch eingebettet sind.

6. Rollbandmaß nach einem der Ansprüche 1 bis 5, dadurch gekennzeichnet, daß die Reibkörper nur auf einem Teilbereich (8) der Anschlagseite (6) aufgebracht sind.

7. Rollbandmaß nach Anspruch 6, dadurch gekennzeichnet, daß die Reibkörper in einem streifenförmigen Bereich (8) der Anschlagseite (6) aufgebracht sind, der sich am freien Ende des Anschlagteils (5) befindet.

8. Rollbandmaß nach einem der Ansprüche 1 bis 7, dadurch gekennzeichnet, daß die Reibkörper zumindest teilweise im Abstand voneinander verteilt angeordnet sind.

9. Rollbandmaß nach einem der Ansprüche 1 bis 7, dadurch gekennzeichnet, daß die Reibkörper in einer geschlossenen Schicht dicht gepackt angeordnet sind.

## Claims

1. A roll tape measure, such as a pocket tape measure, boxed tape measure, frame-type tape measure or the like, the measuring tape (1) of which is provided at its free end with an abutment member (5) which projects approximately at a right angle to the measuring tape (1) and which is intended to abut the tape (1) against the edge or rim of an article (11) being measured, the abutment side (6) of the abutment member (5) nearest the measuring tape (1) being roughened, characterised in that friction elements in the form of fine crystals of mineral or synthetic materials are applied to the abutment side (6), which have hard and sharp edges and/or points, and in that the grain size is at maximum 0.25 mm, preferably about 0.12 mm.

2. A roll tape measure according to Claim 1, characterised in that the friction elements consist of a material which has at least a degree of hardness 4, preferably a degree of hardness 6, on Mohs' scale of hardness.

3. A roll tape measure according to Claim 1 or 2, characterised in that the friction elements consist of a material such as glass, silicate, quartz, feldspar, sapphire, corundum or diamond.

4. A roll tape measure according to any one of Claims 1 to 3, characterised in that the friction elements are applied substantially in a single layer.

5. A roll tape measure according to Claim 1, characterised in that the friction elements are glued to the abutment member (5) or are sintered thereto or are electrochemically embedded therein.

6. A roll tape measure according to any one of Claims 1 to 5, characterised in that the friction elements are applied only to a portion (8) of the abutment side (6).

7. A roll tape measure according to Claim 6, characterised in that the friction elements are applied in a strip-like zone (8) of the abutment side (6), which is situated at the free end of the abutment member (5).

8. A roll tape measure according to any one of Claims 1 to 7, characterised in that the friction elements are arranged at least partly spaced apart from one another.

9. A roll tape measure according to any one of Claims 1 to 7, characterised in that the friction elements are arranged tightly packed in a closed layer.

## Revendications

1. Ruban de mesure enroulable, tel qu'un ruban de mesure de poche, en boîtier, dans un châssis ou analogue, dont le ruban de mesure (1) est pourvu, à son extrémité libre, d'une partie de butée (5) faisant saillie à peu près à angle droit par rapport au ruban de mesure (1) et conçue pour faire venir la bande (1) en butée sur l'arête ou le bord d'un objet à mesurer (11), où la face de butée (6) tournée vers le ruban de mesure (1) de la partie de butée (5) est rendue rugueuse, caractérisé en ce que des corps de frottement, se présentant sous la forme de fins cristaux de substance minérale ou synthétique sont appliqués sur la face de butée (6), en ayant des arêtes dures ou vives et/ou des pointes, et en ce que la taille des grains est au maximum de 0,25 mm, de préférence d'à peu près 0,12 mm.

2. Ruban de mesure enroulable selon la revendication 1, caractérisé en ce que les corps de frottement sont composés en une substance ayant au moins le degré de dureté 4, de préférence le degré de dureté 6, sur l'échelle de dureté de Mohs.

3. Ruban de mesure enroulable selon la revendication 1 ou 2, caractérisé en ce que les corps de frottement sont en une substance telle que le verre, un silicate, le quartz, le feldspath, le saphir, le corindon ou le diamant.

4. Ruban de mesure enroulable selon l'une des revendications 1 à 3, caractérisé en ce que les corps de frottement sont appliqués pratiquement en une couche

5. Ruban de mesure enroulable selon la revendication 1, caractérisé en ce que les corps de frottement sont collés ou frittés ou noyés de façon galvanique sur la partie de butée (5).

6. Ruban de mesure enroulable selon l'une des revendications 1 à 5, caractérisé en ce que les corps de frottement ne sont appliqués que sur une zone partielle (8) de la face de butée (6).

7. Ruban de mesure enroulable selon la revendication 6, caractérisé en ce que les corps de frottement sont appliqués dans une zone en bande (8) de la face de butée (6), qui s'étend sur l'extrémité libre de la partie de butée (5).

8. Ruban de mesure enroulable selon l'une des revendications 1 à 7, caractérisé en ce que les corps de frottement sont disposés de façon répartie, au moins partiellement, à distance les uns des autres.

9. Ruban de mesure enroulable selon l'une des revendications 1 à 7, caractérisé en ce que les corps de frottement sont disposés en paquets denses en une couche fermée.
